**Europäisches Patentamt**

**European Patent Office**

**Office européen des brevets**

(11) Veröffentlichungsnummer: **0 133 268**
**B1**

(12) # EUROPÄISCHE PATENTSCHRIFT

(45) Veröffentlichungstag der Patentschrift:
**11.05.88**

(21) Anmeldenummer: **84108687.9**

(22) Anmeldetag: **23.07.84**

(51) Int. Cl.⁴: **C 03 B 8/04, C 03 B 37/018, C 03 B 37/025**

(54) Verfahren zur Herstellung von Glas durch Abscheidung aus der Gasphase.

(30) Priorität: **29.07.83 DE 3327484**

(43) Veröffentlichungstag der Anmeldung:
**20.02.85 Patentblatt 85/8**

(45) Bekanntmachung des Hinweises auf die Patenterteilung:
**11.05.88 Patentblatt 88/19**

(84) Benannte Vertragsstaaten:
**DE FR GB**

(56) Entgegenhaltungen:
**DE - A - 2 625 064**
**GB - A - 969 467**

**PATENT ABSTRACTS OF JAPAN, unexamined applications, C field, Band 5, no. 16, 30. Januar 1981, THE PATENT OFFICE JAPANESE GOVERNMENT, Seite 112 C 41**
**PATENT ABSTRACTS OF JAPAN, unexamined applications, C field, Band 6, no. 85, 22. Mai 1982, THE PATENT OFFICE JAPANESE GOVERNMENT, Seite 69 C 103**

(73) Patentinhaber: **Siemens Aktiengesellschaft Berlin und München, Wittelsbacherplatz 2, D-8000 München 2 (DE)**

(72) Erfinder: **Douklas, Nikolaos, Dr., Margeritenweg 17, D-8011 Kirchheim (DE)**
Erfinder: **Grabmaier, Josef, Dr., Am Seefeld 17, D-8137 Berg (DE)**

## Beschreibung

Die vorliegende Erfindung betrifft nach dem Oberbegriff des Patentanspruchs 1 ein Verfahren zur Herstellung von Glas durch Abscheidung aus der Gasphase.

Lichtleitfasern für die optische Nachrichtenübertragung werden heute fast ausschliesslich aus Vorformen gezogen, die mit Hilfe eines Verfahrens der genannten Art hergestellt werden. Die bei diesem Verfahren abgeschiedenen Gläser weisen die für den optisch wirksamen Kern und Mantel einer Lichtleitfaser erforderliche Qualität auf.

Für die Herstellung von Vorformen mittels eines Verfahrens der genannten Art werden folgende drei Verfahrensvarianten angewandt:

a) Das MCVD-Verfahren (*modified chemical vapor deposition*-Verfahren, siehe dazu Siemens Forschungs- und Entwicklungsbericht, Band 5 (1976) Nr. 3, S. 171–175), bei dem die Abscheidung im Inneren eines Glasrohres erfolgt,

b) das sog. OVD-Verfahren (*outside vapor deposition*-Verfahren), bei dem eine Aussenabscheidung auf der Mantelfläche eines Hilfsstabes erfolgt, und

c) das sog. VAD-Verfahren (*vapor axial deposition*-Verfahren), bei dem eine Aussenabscheidung auf der Stirnfläche eines Stabes erfolgt.

Gemeinsam ist allen drei Verfahrensvarianten, dass dampfförmiges $SiCl_4$, aber auch beispielsweise als Dotierstoff zur Erhöhung oder Erniedrigung der Brechzahl dienendes dampfförmiges $CeCl_4$ bzw. $POCl_3$ in einer Heizzone zu Oxiden umgesetzt und diese auf einer relativ kalten Fläche in Pulver oder Russform niedergeschlagen werden. In einem weiteren Schritt wird das pulverförmige Material zum Glas geschmolzen oder gesintert. Das Endprodukt ist ein die Vorform bildender Lichtleitstab, aus dem dann die Lichtleitfasern gezogen werden können.

Alle genannten Verfahrensvarianten liefern hochreine und damit niedrigdämpfende Lichtleitfasern. Allerdings ist die Produktionsrate aufgrund der geringen Abscheidungsrate aus der Gasphase noch relativ niedrig. Ein grosser Teil der dampfförmigen Materialien geht als Abgas verloren.

Aufgabe der vorliegenden Erfindung ist es aufzuzeigen, wie bei einem Verfahren der eingangs genannten Art, insbesondere beim MCVD-Verfahren, die Abscheidungsrate erhöht werden kann.

Diese Aufgabe wird durch die im kennzeichnenden Teil des Patentanspruchs 1 angegebenen Merkmale gelöst.

Die Kondensationskerne, deren Grösse beispielsweise etwa 1 μm beträgt und welche die heisse Reaktionszone erfüllen, bilden zusätzliche Flächen für die Feststoffabscheidung der Dämpfe in der Reaktions- bzw. Abscheidungszone.

In einer bevorzugten Ausgestaltung des erfindungsgemässen Verfahrens werden gemäss Anspruch 2 die Kondensationskerne der Abscheidungszone in Form von einem oder mehreren feinpulvrigen Oxiden und/oder Pulverteilchen zugeführt.

Zweckmässig ist es dabei, wenn gemäss Anspruch 3 als Oxid der Grundstoff des herzustellenden Glases, beispielsweise $SiO_2$ und/oder das Oxid eines Dotierstoffes, beispielsweise $GeO_2$ oder/und ein kommerziell erhältliches Oxid verwendet wird, wodurch die Abscheidungsrate günstig beeinflusst wird. Eine einfache Art, bei einem Verfahren nach Anspruch 2 oder 3 die Kondensationskerne zuzuführen und damit die Abscheidungsrate günstig zu beeinflussen, besteht gemäss Anspruch 4 darin, die Kondensationskerne, insbesondere in Form von kommerziell erhältlichen Oxiden dem Reaktionsgas und/oder dem Trägergas vor der Abscheidungszone etwa in μm-Grösse beizumischen.

Eine weitere zweckmässige Ausgestaltung eines erfindungsgemässen Verfahrens besteht darin, gemäss Anspruch 5 Pulverteilchen zu verwenden, die im Abscheidungsprozess als Aerosol entstehen und nicht in der Abscheidungszone niederschlagen. Solche Aerosole sind bisher abgeleitet worden.

Eine besonders vorteilhafte Möglichkeit zur Erzeugung von zusätzlichen Kondensationskernen besteht gemäss Anspruch 6 darin, die Kondensationskerne während des Abscheidungsprozesses neben der Abscheidungszone zu erzeugen und von dort in die Abscheidungszone zu bringen.

Vorteilhafterweise wird dabei gemäss Anspruch 7 so vorgegangen, dass die Kondensationskerne in einem Reaktionsgas erzeugt werden und dann zusammen mit der Reaktionsgasmischung in die Abscheidungszone geleitet werden.

Dabei kann gemäss Anspruch 8 so vorgegangen werden, dass die Kondensationskerne vor der Abscheidungszone in einer dieser vorgeschalteten Heizzone erzeugt werden, die eine niedrigere Temperatur aufweist, als die heisse Abscheidungszone.

Ein erfindungsgemässes Verfahren, insbesondere die Verfahren nach den Ansprüchen 4 bis 8, werden vorteilhafterweise für das MCVD-Verfahren verwendet, bei dem der Materialverlust durch Abgase bei der heutigen Verfahrensweise noch relativ gross ist. Diese Verwendung führt beim MCVD-Verfahren zu einer Verbesserung der Abscheidungsrate etwa um den Faktor 2.

Die Erfindung wird beispielhaft in der folgenden Beschreibung anhand der Figuren näher erläutert. Von den Figuren zeigen:

Fig. 1 in schematischer Darstellung das wesentliche einer Anordnung zur Durchführung des bekannten MCVD-Verfahrens,

Fig. 2 die Anordnung nach Figur 1 mit einer Vorrichtung zum Einbringen von Kondensationskernen in Form eines feinpulvrigen Oxides, und

Fig. 3 die Anordnung nach Figur 1 mit einer zusätzlichen Vorrichtung zur Erzeugung einer vorgeschalteten Heizzone, in der Kondensationskerne erzeugt werden.

Die Figuren sind rein schematisch und nicht massstabsgetreu.

Dem hier beschriebenen Verfahren ist das aus der genannten Veröffentlichung in Siemens Forschungs- und Entwicklungsberichte bekannte und dort näher beschriebene MCVD-Verfahren zugrundegelegt. Die wesentlichen Verfahrensschritte sind folgende:

In einem um seine Längsachse sich drehenden Glasrohr 1, beispielsweise aus $SiO_2$ wird durch einen Brenner 2 eine Heizzone erzeugt. In das Rohr wird eine zur Abscheidung erforderliche Reaktionsgasmischung geleitet, aus der in der Heizzone durch chemische Reaktion das Glaspulver entsteht, das sich in Bezug auf die Strömungsrichtung des Reaktionsgasgemisches stromabwärts der Heizzone abscheidet und das dann zur Glasschicht klargeschmolzen wird. Der Brenner 2 wird während des Abscheidungsprozesses in Längsrichtung des Rohres langsam verschoben, so dass die Abscheidungszone, die aus der Heizzone und dem stromabwärts angrenzenden Rohrbereich besteht, in dem sich das Pulver an der Rohrinnenwand abscheidet, die ganze Länge des Rohres durchwandert.

Bei dem bekannten Verfahren wird beispielsweise zunächst eine $SiO_2$-$B_2O_3$-Glasschicht unter Verwendung von $SiCl_4$ + $BCl_3$ + $O_2$ als Reaktionsgasmischung auf der Innenwand des $SiO_2$-Rohres abgeschieden und dann darauf eine $SiO_2$-$GeO_2$-Glasschicht unter Verwendung von $SiCl_4$ + $GeCl_4$ + $O_2$ als Reaktionsgasmischung.

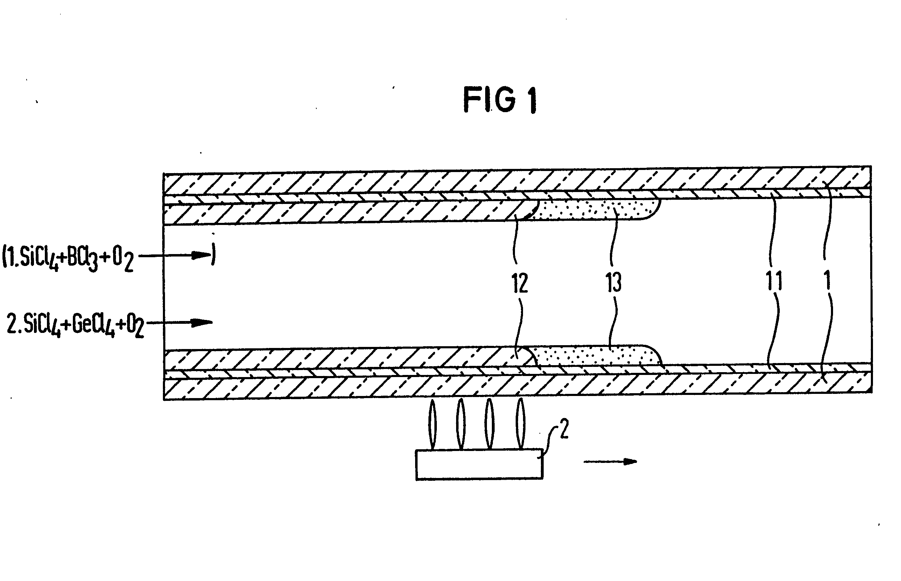

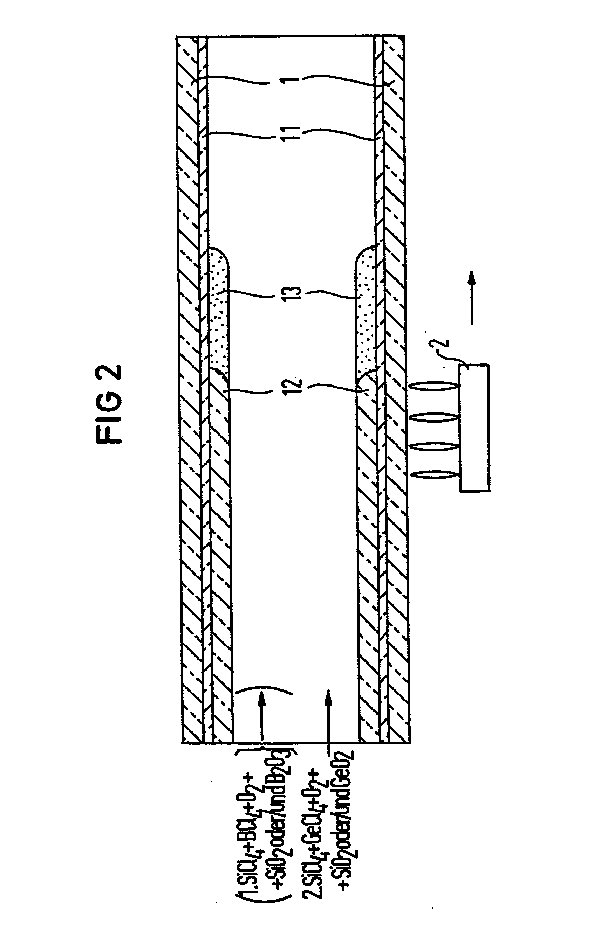

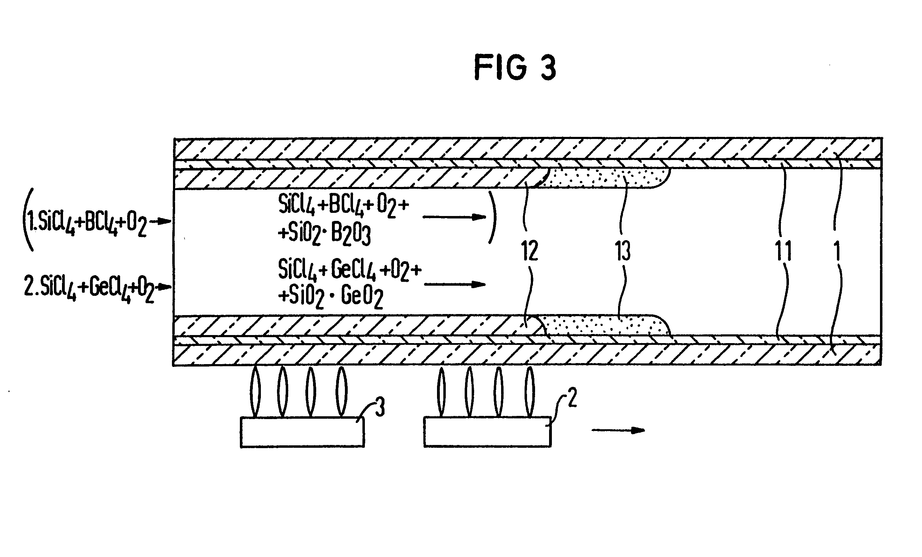

In der Figur 1 ist der Zustand dargestellt, bei dem die $SiO_2$-$B_2O_3$-Glasschicht bereits erzeugt worden ist und die $SiO_2$-$GeO_2$-Glasschicht gerade erzeugt wird. Das gleiche ist auch für die nachfolgend beschriebenen Verfahren und die zugehörigen Figuren 2 und 3 angenommen.

## Patentansprüche

1. Verfahren zur Herstellung von Glas durch Abscheidung aus der Gasphase, dadurch gekennzeichnet, dass der Abscheidungsprozess im Beisein von der Abscheidungszone zusätzlich zu den Gasen zugeführten Kondensationskernen erfolgt.

2. Verfahren nach Anspruch 1, dadurch gekennzeichnet, dass die Kondensationskerne der Abscheidungszone in Form von einem oder mehreren feinpulvrigen Oxiden und/oder anderen Pulverteilchen zugeführt werden.

3. Verfahren nach Anspruch 2, dadurch gekennzeichnet, dass als Oxid der Grundstoff des herzustellenden Glases und/oder das Oxid eines Dotierstoffes oder/und ein kommerziell erhältliches Oxid verwendet wird.

4. Verfahren nach Anspruch 2 oder 3, dadurch gekennzeichnet, dass die Kondensationskerne dem Reaktionsgas und/oder einem Trägergas vor der Abscheidungszone etwa in µm-Grösse beigemischt werden.

5. Verfahren nach einem der vorhergehenden Ansprüche, dadurch gekennzeichnet, dass als Kondensationskerne die Pulverteilchen verwendet werden, die im Abscheidungsprozess als Aerosol entstehen und nicht in der Abscheidungszone niederschlagen.

6. Verfahren nach einem der vorhergehenden Ansprüche, dadurch gekennzeichnet, dass die Kondensationskerne während des Abscheidungsprozesses neben der Abscheidungszone erzeugt und von dort in die Abscheidungszone gebracht werden.

7. Verfahren nach Anspruch 6, dadurch gekennzeichnet, dass die Kondensationskerne in einem Reaktionsgas erzeugt werden und dann zusammen mit dem Reaktionsgas in die Abscheidungszone geleitet werden.

8. Verfahren nach Anspruch 7, dadurch gekennzeichnet, dass die Kondensationskerne vor der Abscheidungszone in einer dieser vorgeschalteten Heizzone erzeugt werden, die eine niedrigere Temperatur aufweisen, als die heisse Abscheidungszone.

## Claims

1. A process for the production of glass by deposition from the gas phase, characterised in that the deposition process is carried out in the presence of condensation nuclei which are supplied to the deposition zone in addition to the gases.

2. A process as claimed in Claim 1, characterised in that the condensation nuclei are supplied to the deposition zone in the form of one or more finely-powdered oxides and/or other powder particles.

3. A process as claimed in Claim 2, characterised in that as oxide, there is used the basic material of the glass to be produced and/or the oxide of a dopant and/or a commercially available oxide.

4. A process as claimed in Claim 2 or Claim 3, characterised in that the condensation nuclei are mixed with the reaction gas and/or a carrier gas before the deposition zone, approximately in the µm range.

5. A process as claimed in one of the preceding Claims, characterised in that there are used as condensation nuclei, the powder particles which are formed during the deposition process as an aerosol and are not deposited in the deposition zone.

6. A process as claimed in one of the preceding Claims, characterised in that the condensation nuclei are produced during the deposition process near the deposition zone and are introduced thence into the deposition zone.

7. A process as claimed in Claim 6, characterised in that the condensation nuclei are produced in a reaction gas and are then fed, together with the reaction gas, into the deposition zone.

8. A process as claimed in Claim 7, characterised in that the condensation nuclei are produced before the deposition zone in a heating zone arranged in series therewith which is at a lower temperature than the hot deposition zone.

## Revendications

1. Procédé de fabrication de verre par dépôt en phase gazeuse, caractérisé en ce qu'il consiste à effectuer le procédé de dépôt en présence de noyaux de condensation envoyés en plus des gaz à la zone de dépôt.

2. Procédé suivant la revendication 1, caractérisé en ce qu'il consiste à envoyer les noyaux de condensation à la zone de dépôt sous forme d'un ou de plusieurs oxydes en poudre fine et/ou d'autres particules de poudre.

3. Procédé suivant la revendication 2, caractérisé en ce qu'il consiste à utiliser comme oxyde la matière de base du verre à fabriquer et/ou l'oxyde d'une matière de dopage ou/et un oxyde que l'on peut se procurer dans le commerce.

4. Procédé suivant la revendication 2 ou 3, caractérisé en ce qu'il consiste à mélanger les noyaux de condensation de la dimension du micron environ au gaz de réaction et/ou à un gaz porteur, en amont de la zone de dépôt.

5. Procédé suivant l'une des revendications précédentes, caractérisé en ce qu'il consiste à utiliser comme noyaux de condensation, les particules de poudre qui se créent sous forme d'aérosol dans le processus de dépôt et qui ne se déposent pas dans la zone de dépôt.

6. Procédé suivant l'une des revendications précédentes, caractérisé en ce qu'il consiste à produire les noyaux de condensation par un processus de dépôt à côté de la zone de dépôt et à les envoyer de là dans la zone de dépôt.

7. Procédé suivant la revendication 6, caractérisé en ce qu'il consiste à produire les noyaux de condensation dans un gaz de réaction et à les envoyer ensuite, en même temps que le gaz de réaction, à la zone de dépôt.

8. Procédé suivant la revendication 7, caractérisé en ce qu'il consiste à produire les noyaux de condensation en amont de la zone de dépôt dans une zone de chauffage située en amont de la zone de dépôt et ayant une température plus basse que la zone de dépôt chaude.

FIG 1

1. $SiCl_4 + BCl_3 + O_2$

2. $SiCl_4 + GeCl_4 + O_2$

# FIG 2

$$1.\ SiCl_4 + BCl_4 + O_2 + \\ + SiO_2\ oder/und\ B_2O_3$$

$$2.\ SiCl_4 + GeCl_4 + O_2 + \\ + SiO_2\ oder/und\ GeO_2$$

12    13    11    1

2

0 133 268

## FIG 3

$SiCl_4 + BCl_4 + O_2 + \rightarrow SiO_2 \cdot B_2O_3$

$SiCl_4 + GeCl_4 + O_2 + \rightarrow SiO_2 \cdot GeO_2$

1. $SiCl_4 + BCl_4 + O_2 \rightarrow$

2. $SiCl_4 + GeCl_4 + O_2$

1

11

13

12

2

3